(19) Europäisches Patentamt
European Patent Office
Office européen des brevets

(11) **EP 3 617 666 A2**

(12) **EUROPEAN PATENT APPLICATION**

(43) Date of publication:
**04.03.2020 Bulletin 2020/10**

(51) Int Cl.:
**G01F 23/26** (2006.01)

(21) Application number: **19176251.7**

(22) Date of filing: **23.05.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.08.2018 US 201816117240**

(71) Applicant: **Sensata Technologies, Inc.**
**Attleboro, MA 02703 (US)**

(72) Inventors:
- TADAS, Harshad V.
  **Attleboro, MA Massachusetts 02703 (US)**
- HANNA, Tyler S.
  **Attleboro, MA Massachusetts 02703 (US)**
- LAL, Nikhil B.
  **Attleboro, MA Massachusetts 02703 (US)**
- LEGENDRE, Andrew
  **Attleboro, MA Massachusetts 02703 (US)**

(74) Representative: **FRKelly**
**27 Clyde Road**
**Dublin D04 F838 (IE)**

(54) **FLUID LEVEL SENSOR APPARATUS WITH INTER-DIGITATED PLANR CAPACITORS FOR DIRECTLY INSERTING INTO A FLUID**

(57) According to one embodiment, a fluid level sensor apparatus for directly inserting into an oil-based fluid is disclosed. The apparatus comprises a sense element that includes a plurality of electrodes mounted on one side of a substrate. In this embodiment, the plurality of electrodes form at least two inter-digitated planar capacitors in which a capacitance of one of the inter-digitated planar capacitors varies as a function of the level of the oil-based fluid within a fluid cavity. The apparatus in this embodiment also includes a passivation layer covering the two inter-digitated planar capacitors and an oleophobic coating covering the glass barrier layer.

FIG. 1

**Description**

TECHNICAL FIELD

The present disclosure relates to capacitive fluid level sensors.

BACKGROUND ART

There are various known methods to measuring the level of a fluid within a fluid container. One such method includes using one or more capacitive sensors that are configured to change in capacitance with a change in the surface level of a fluid within a reservoir. In this method, as the fluid level rises, the capacitance of a capacitive sensor increases because the dielectric constant of the fluid is higher than the air ($k$=1) that it replaces. For high dielectric constant fluids, such as water ($k$=80), the disparity between the dielectric constants allows, in some applications, the capacitive sensor to be placed outside of the fluid reservoir that is being measured. Low dielectric constant fluids, such as oil ($k$=2-3), which have a close similarity in dielectric constant to air, may require the capacitive sensor to be directly inserted into the fluid. One disadvantage to directly inserting the capacitive sensor in a fluid is that the properties of the fluid may impact the device's reliability and accuracy over life.

SUMMARY OF THE INVENTION

According to one embodiment, a fluid level sensor apparatus for directly inserting into an oil-based fluid is disclosed. The apparatus comprises a sense element that includes a plurality of electrodes mounted on one side of a substrate. In this embodiment, the plurality of electrodes form at least two inter-digitated planar capacitors in which the capacitance varies as a function of the level of the oil-based fluid within a fluid cavity. The apparatus in this embodiment also includes a passivation layer covering the inter-digitated planar capacitors and an oleophobic coating covering the glass barrier layer. The oleophobic coating reduces the shedding time of the oil-based fluid from the two inter-digitated planar capacitors, which improves the reliability, accuracy, and response time of the apparatus.

In another embodiment, a fluid level sensor apparatus for directly inserting into a fluid is disclosed. The apparatus comprises a sense element and a metallic shield. The sense element includes a plurality of electrodes mounted on one side of a substrate. In this embodiment, the plurality of electrodes form at least two inter-digitated planar capacitors in which the capacitance varies as a function of the level of the fluid within a fluid cavity. The metallic shield is advantageous because it reduces interference with the two inter-digitated planar capacitors from outside the metallic shield and provides environmental isolation for sense element. The metallic shield has the added advantage of including one or more elements for supporting the sense element within the metallic shield.

The foregoing and other objects, features, and advantages of the invention will be apparent from the following more particular descriptions of exemplary embodiments of the invention as illustrated in the accompanying drawings wherein like reference numbers generally represent like parts of exemplary embodiments of the invention.

BRIEF DESCRIPTION OF THE DRAWINGS

So that those having ordinary skill in the art to which the disclosed technology appertains will more readily understand how to make and use the same, reference may be had to the following drawings.

FIG. 1 depicts a side cross-sectional view of a fluid level sensor apparatus, according to one embodiment of the present disclosure.

FIG. 2 depicts a side view of a fluid level sensor apparatus according to one embodiment of the present disclosure.

FIG. 3 depicts an isometric view of a fluid level sensor apparatus before being assembled, according to one embodiment of the present disclosure.

FIG. 4 depicts an isometric view of the fluid level sensor apparatus of FIG. 3, after being assembled.

FIG. 5 depicts an isometric view of a fluid level sensor apparatus before being assembled, according to one embodiment of the present disclosure.

FIG. 6 depicts an isometric view of the fluid level sensor apparatus of FIG. 5, after being assembled.

FIG. 7 depicts an isometric view of a fluid level sensor apparatus before being assembled, according to one embodiment of the present disclosure.

FIG. 8 depicts an isometric view of the fluid level sensor apparatus of FIG. 7, after being assembled.

FIG. 9 depicts an isometric view of a fluid level sensor apparatus before being assembled, according to one embodiment of the present disclosure.

FIG. 10 depicts an isometric view of a fluid level sensor apparatus, according to one embodiment of the present disclosure.

FIG. 11 depicts an isometric view of the fluid level sensor apparatus of FIG. 9, after being assembled.

DESCRIPTION OF EMBODIMENTS

The present disclosure describes fluid level sensor apparatuses that include inter-digitated planar capacitors for directly inserting into a fluid. In a particular embodiment for oil-based fluids, the inter-digitated planar capacitors are passivated and an oleophobic coating is applied over the passivation layer. In this embodiment, the oleophobic coating reduces the shedding time of the oil-based fluid from at least one of the capacitors of the apparatus, which improves the reliability, accuracy, and response time of the apparatus when the apparatus is used to measure the level of an oil-based fluid within a reservoir.

Also described below is another embodiment in which a fluid level sensor apparatus includes a metallic shield for supporting and reducing electromagnetic interference with the inter-digitated planar capacitors. Reducing interference is advantageous because it protects the inter-digitated planar capacitors from stray capacitance and provides environmental isolation. A metallic shield that also provides support for the inter-digitated planar capacitors is advantageous because it can help prevent damage to the capacitors from movement of the apparatus.

The other advantages, and other features of the apparatuses and methods disclosed herein, will become more readily apparent to those having ordinary skill in the art from the following detailed description of certain embodiments taken in conjunction with the drawings which set forth representative embodiments of the present invention. Like reference numerals are used herein to denote like parts. Further, words defining orientation such as "upper", and "lower" are merely used to help describe the location of components with respect to one another. For example, an "upper" surface of a part is merely meant to describe a surface that is separate from the "lower" surface of that same part. No words denoting orientation are used to describe an absolute orientation (i.e., where an "upper" part must always be on top).

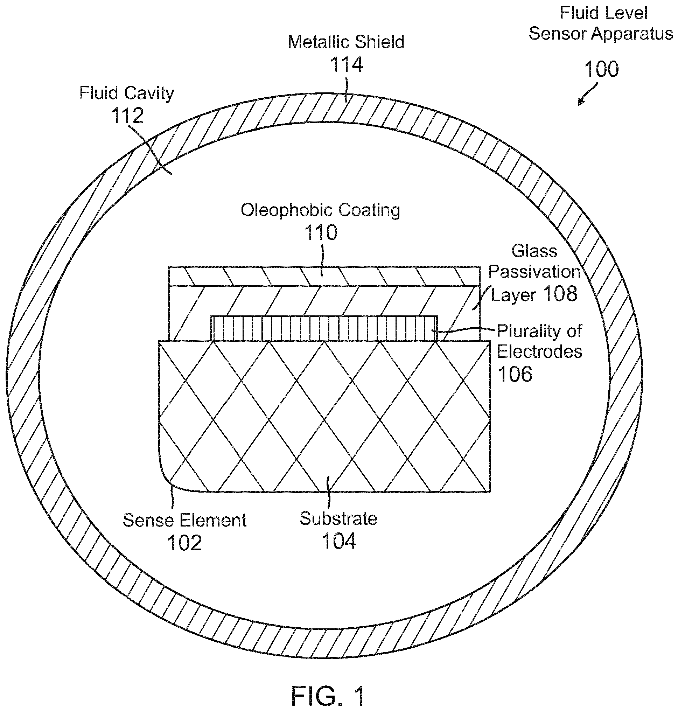

FIG. 1 illustrates a side cross sectional view of a fluid level sensor apparatus (100), according to one embodiment of the present disclosure. As illustrated and further described herein, the fluid level sensor apparatus (100) depicted in FIG. 1 is inserted directly into an oil-based fluid (not illustrated) within a fluid container (not illustrated), such as an engine oil reservoir. For ease of description, the oil-based fluid is simply referred to as a fluid throughout the specification.

In the example of Figure 1, the apparatus (100) includes a sense element (102) surrounded by a metallic shield (114). The area between the metallic shield (114) and the sense element (102) forms a fluid cavity (112). The fluid cavity (112) is open to receiving varying levels of the fluid within the fluid container. For example, in a particular embodiment, the metallic shield (114) includes one or more inlet holes (not shown) through which fluid may flow from the fluid container into the fluid cavity (112).

The sense element (102) of FIG. 1 includes a substrate (104). According to one embodiment of the present invention, a plurality of electrodes (106) are mounted on one side of the substrate (104) to form a plurality of capacitors. The electrodes are made of a conductive material, such as for example, copper, gold, doped polysilicon, aluminum or titanium nitride (TiN). Mounting the plurality of electrodes (106) to the substrate (104) may be carried out by a variety of methods known to those of skill in the art, including but not limited to electroplating, electroless platting, or screen-printing to the substrate (104).

In a particular embodiment, a capacitor is formed by a pair of electrodes and the composition of each electrode in an electrode pair of a capacitor may vary from each other. For example, one electrode of the plurality of electrodes (106) may be cooper and the other electrode in the electrode pair of a capacitor may be aluminum. Readers of skill in the art will realize that the choice of conductive materials and dielectric materials depends on the application. One of skill in the art will also realize that the size and shape of the electrodes in the plurality of electrodes (106) may also vary depending on the application. In one configuration, the electrodes are rectangular-shaped plates and wire strips.

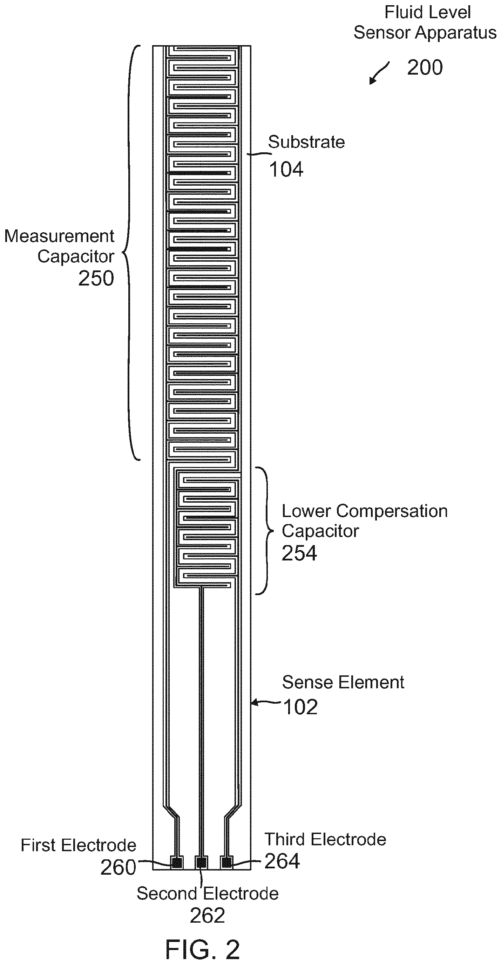

In a particular embodiment, the plurality of electrodes (106) form at least two inter-digitated planar capacitors (not shown). As will be explained in FIG. 2, the inter-digitated planar capacitors may be configured such that the capacitance of one of the capacitors varies linearly with changes in the level of the fluid and the output of the other capacitor provides an estimate of the dielectric constant of the fluid of interest.

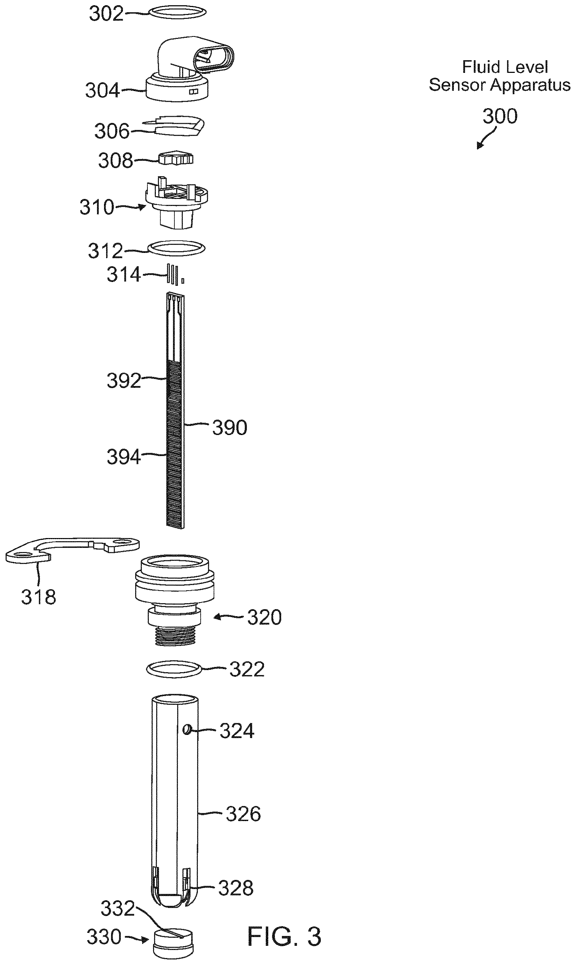

The plurality of electrodes (106) may be coupled to an analog or digital capacitive application specific integrated circuit (ASIC) (not shown). As will be explained in FIG. 3, the ASIC may be configured to process the outputs of the plurality of electrodes (106) mounted on the sense element (102). In a particular embodiment, the ASIC includes signal processing circuitry for converting the capacitance signals received from the plurality of electrodes (106) on the sense element (102) into a linear ratio-metric analog voltage and digital output that indicates a level of the surface of the fluid relative to the apparatus (100).

In the example of FIG. 1, the plurality of electrodes (106) are passivated by applying a passivation layer (108), such as a glass layer or a glass-ceramic layer, to the plurality of electrodes (106). In an example embodiment, the glass of the passivation layer (108) acts to make the underlying plurality of electrodes (106) generally impervious to liquids or gases. Readers of skill in the art will realize that the application of the passivation layer (108) may be performed by a suitably appropriate method known to one of skill in the art. For example, the glass for the passivation layer (108) may particularly be formed by applying a suspension or a paste of a solvent and a glass powder (e.g., silicate glass powder that includes bismuth, zinc, boron or combinations of these substances, for example, bismuth-boron-zinc silicate glass powder) by suitable printing methods, dispensing or pico-deposition methods. Examples of solvent in which the glass power is dispensed may include by are not limited to ester or an alcohol ketone. In addition to the solvent, the suspension may also include a binding agent, such as polymethacrylate or cellulose nitrate. Readers of skill in the art will realize that the above example materials are provided for example only and that different materials may be selected by one of skill in the art in dependence upon the particular application and operating conditions in which the apparatus (100) will be used.

In this example, the paste or suspension of the glass powder may be heated so that the solvent is evaporated, and any organic components used to disperse the glass powder included in the suspension that do not evaporate, are burnt off by the high temperature required to melt the glass. This process results in the glass powder melting and a formation of a glass film that remains on the plurality of electrodes (106).

Readers of skill in the art will realize that the selection of a suitable glass for the passivation layer (108) may depend on the material and properties of the substrate (104) and the plurality of electrodes (106). For example, a glass may be selected such that the softening temperature of the selected glass is above the operating temperature of the plurality of electrodes (106) to avoid having the passivation layer (108) melt during operating of the sense element (102), but not too high as to damage the substances of the plurality of electrodes (106) during application of the passivation layer (108). Also, the proportions of other substances (e.g., lead oxide, bismuth oxide) that may be within the glass must also be considered for interactions with the underlying plurality of electrodes (106) and for their thermal coefficients of expansion. For example, in order to avoid cracks in the passivation layer (108), the deviations in the thermal coefficient of expansion between the plurality of electrodes (106) and the passivation layer (108) may be considered along with the thickness of the passivation layer (108). Thickness of the glass deposit may also be controlled to optimize the sensitivity of the element for a particular application. For example, a thin passivation layer may be deposited for more sensitive elements for short element length and/or dielectric constant fluids.

As explained above, the disadvantage to directly inserting a capacitive sensor into a fluid is that the properties of the fluid may impact the device's capacitance and thus reduce the reliability and the accuracy of the capacitive sensor to indicate the level of the surface of the fluid within the fluid container. For example, one property of oil is that it is highly viscous, especially at low surface tension, resulting in slow shedding behavior. To illustrate, assuming a surface tension of 5w-30 oil at RT ~31 dynes/cm, compared to a water surface tension at RT ~72 dynes/cm. The slow shedding behavior, coupled with the oil's propensity to thick film over time may result in permanent offset shift over life of the oil. To avoid this offset-shift, an oleophobic coating (110) may be used to prevent the oil-based fluid from filming and to reduce the shedding time of the oil-based fluid from the sense element (102). In this embodiment, the fluid level sensor apparatus (100) may be referred to as an oleophobic fluid level sensor apparatus.

In the example of FIG. 1, the oleophobic coating (110) is applied and covers the glass barrier layer (108). Oleophobic refers to the physical property of a molecule or group of molecules to not attract oil. A metric of phobicity may be contact angle as a measure of the wettability of a surface. The contact angle quantifies the wettability of a solid surface at the liquid vapor interface as determined by the Young-Laplace equation. In the Young-Laplace equation, the equilibrium contact angle is represented as the angle between vectors at the boundary of the solid-liquid interface and the liquid-gas interface. Oleophobicity is typically defined as a contact angle in excess of 60 degrees between the solid-liquid interface and the liquid-gas interface.

According to one embodiment of the present invention, to make the passivation layer (108) oleophobic, the surface energy of the passivation layer (108) may be lowered to increase the contact angle for the oil-based fluid on the surface of the sense element (102).

In a particular embodiment, fluorocarbons may be used as part of the oleophobic coating (110). In general, fluorocarbons are organofluorine compounds that have an extremely strong carbon-fluorine bonds, the third strongest in polymer chemistry, and are consequently very stable and minimally reactive with poor solubility in most solvents. They serve as the basis for fluropolymers, such as Polytetrafluoroethylene (PTFE). The strongest carbon-fluorine bonds in

EP 3 617 666 A2

PTFE result in a surface with very low surface energy.

To achieve a similar low surface energy surface without the bulk material of PTFE, a mono-layer may instead be bonded to the passivation layer (108) using silanes. In this embodiment, bonding the fluorocarbon to the passivation layer (108) includes using hydroxyl rich groups. For example, an initial hydrogen bond may form when the substrate is placed in the solution. The hydroxyl groups provide anchoring points for the non-polar organic substation of the silane, which shields the polar substrates from interaction with oil or water. In this example, if all the hydroxyl groups on the glass substrate are capped by silanes, the surface will be hydrophobic. However, this behavior, if using silanes alone, may not result in oleophobicity since the polar organic substitution is often hydrocarbon in nature. Instead, to make the surfaces truly oleophobic, the silane surface treatment may use long-chain alkyl silanes and methylated medium chain alkyl silanes. For example, in a particular embodiment, the oleophobic coating (110) includes fluorinated silane. Readers of skill in the art will realize that the selection of the materials of the oleophobic coating (110) may vary based on the particular application and operating conditions in which the apparatus (100) will be used.

In a particular embodiment, the oleophobic coating (110) may improve the response times of the apparatus (100). For example, when oil is added to an oil reservoir, the fluid level sensor apparatus (100) is capable of providing instant level measurement because the time it takes for the oil-based fluid to settle on the sense element (102) will be reduced. In this example, the fluid level sensor apparatus (100) has the advantage of providing sensor output that may be useful for quickly detecting and alerting drivers and technicians of proper oil fill quantity at time of service.

Another advantage of the fluid level sensor apparatus (100) that includes the oleophobic coating (110) is the ability to accurately detect low oil levels. As explained above, by reducing shedding time of the oil from the sense element (102) and reducing the tendency to thick film, less of the oil-based fluid will remain on the sense element (102), thus enabling a more accurate low-level reading.

In the example of FIG. 1, the metallic shield (114) surrounds the sense element (102) and reduces interference with the two inter-digitated planar capacitors from outside the metallic shield (114). The metallic shield (114) may also be configured to provide a mechanical support for the sense element (102). For example, the metallic shield (114) may include one or more ribs (not shown) to reduce movement of the sense element (102) within the cavity (112) of the metallic shield (114).

To illustrate in greater detail the sense element (102) of FIG. 1, FIG. 2 depicts a side view of a fluid level sensor apparatus (200) that includes the sense element (102) of FIG. 1 viewed from an alternative view of FIG. 1. In this view of the sense element (102), a particular configuration of the plurality of electrodes (106) of FIG. 1 is depicted which includes a first electrode (260), a second electrode (262), and a third electrode (264) forming two inter-digitated capacitors (i.e., a measurement capacitor (250) and a reference capacitor (254)).

An inter-digitated planar capacitor is a particular capacitor structure in which a pair of electrodes form a two-dimensional array in which the electrodes are shaped like "fingers" or "combs" and are closely positioned opposed and parallel to each other and alternating in both dimensions of the two-dimensional array with a space therebetween forming an insulating gap.

In the example of FIG. 2, the measurement capacitor (250) and the reference capacitor (254) share the second electrode (262). While FIG. 2 illustrates one exemplary geometric configuration for the plurality of electrodes, those skilled in the art will recognize that other geometries may be used and all such alternative geometries are within the scope of the present invention. For example, in alternative configurations, the measurement capacitor (250) and the reference capacitor (254) do not share a common electrode.

In the example of FIG. 2, the measurement capacitor (250) is positioned such that the range of fluid levels desired to be detected is within the array of the measurement capacitor. The array of the measurement capacitor refers to the area of the capacitor in which the electrical field generated by the electrodes interact. In this example embodiment, the array of the measurement capacitor is of a size and in a position to correspond to the changes in position of the surface of the fluid as the surface of the fluid moves from a lowest detectable level to a highest detectable level. By placing the measurement capacitor within the range of the fluid levels desired to be detected, changes in the position of the surface of the fluid change the size of the area of the electrodes that are covered by the fluid. As the size of the area of the electrodes that are covered by the fluid changes, the capacitance of the measurement capacitor changes linearly with the level of the surface of the fluid. For example, in an engine oil application, as the oil level rises within the oil reservoir, the capacitance measured across the two electrodes of the measurement capacitor increases because the dielectric constant of the oil is higher than the air that it replaces. In this example, the dielectric constant of the oil-based fluid (over variations of temperature and life) may be different enough from the dielectric constant of air to enable the measurement capacitor (250) to indicate fluid level changes as changes in measured capacitance.

In the example of FIG. 2, the reference capacitor (254) is positioned in the lower section of the substrate (104) such that the reference capacitor (254) remains completely immersed in the fluid when the apparatus (200) is inserted into the fluid. In this example, the reference capacitor (254) provides an estimate of the dielectric constant of the fluid in the fluid cavity. As explained below, a fluid level sensor apparatus (100), according to one or more embodiments, may include circuitry that compensates the capacitance of the measurement capacitor (250) with the output of the

5

reference capacitor (254).

In a particular embodiment, there is an optional upper compensation capacitor (not shown) adapted to be positioned above the fluid that provides an estimate of the dielectric constant above the level of the fluid in the fluid cavity. Thus, a fluid level sensor apparatus may be formed from a sense element having only a measurement capacitor and a reference capacitor wherein the level of fluid is determined from the capacitance of the measurement capacitor and is compensated by the amount and rate of change of the capacitance of the reference capacitor.

The outputs of the measurement capacitor (250) and the reference capacitor (254) may be coupled to signal processing circuitry (not shown) to determine the calibrated capacitance of the measurement capacitor (250) and the reference capacitor (254) when the sense element (102) is positioned within the fluid cavity (e.g., the fluid cavity (112) of FIG. 1) such that the reference capacitor (254) is submersed in the fluid and the fluid surface is in contact with the measurement capacitor (250). The circuitry may be configured to dynamically select the electrodes for the measurement capacitor (250) and the reference capacitor (254). The circuitry may also be configured to measure the capacitance of each capacitor (e.g., the measurement capacitor (250) and the reference capacitor (254)) and generate a digitized sensor voltage representing the capacitance of each capacitor. In a particular embodiment, the circuitry is configured to calculate the level of the fluid within the fluid container as a linear function of the capacitance of the measurement capacitor (250) compensated by the amount and rate of change of the capacitance of the reference capacitor (254).

FIG. 3 depicts an isometric view of a fluid level sensor apparatus (300) before being assembled, according to one embodiment of the present disclosure. The apparatus (300) includes a base connector (304) that mates with a customer harness to deliver inputs and outputs from the apparatus to another electrical device, such as a vehicle's power-train control module (PCM). In the example of FIG. 3, the base connector (304) has a substantial 90 degree mounting orientation. Readers of skill in the art will realize that the base connector may be configured for alternative mounting orientations, according to embodiments of the present disclosure. The base connector (304) includes insert-molded terminals for mating with an electronic module assembly (EMA) (306), which in turn makes electrical connection to both a sense element (390), via an array of edge clips (314), and a metallic housing (320). In a particular embodiment, the metallic housing (320) may accommodate an array of mounting techniques. Examples of mounting techniques include threaded, bracketed, grommeted, quarter-turn, and others as will occur to those of skill in the art.

The sense element (390) includes two inter-digitated planar capacitors (a measurement capacitor (392) and a reference capacitor (394)). In a particular embodiment, the measurement capacitor (392) and the reference capacitor (394) are passivated with a passivation layer and an oleophobic coating is applied over the passivation layer. Alternatively, the capacitors (392, 394) may not be passivated nor have an oleophobic coating applied.

Similar to the capacitors (250, 254) in FIG. 2, one of the capacitors (e.g., the reference capacitor (392)) is designed to remain submerged at all times in the application fluid, so as to track fluid capacitance over temperature and fluid life. The other capacitor (e.g., the measurement capacitor (394)) is positioned to cover a detectable range of surface levels of the fluid. The output of the measurement capacitor (394) varies as a function of the change in level of the fluid. As the dielectric constant changes during the aforementioned conditions, the capacitance change of the reference capacitor (392) allows the ASIC to properly adjust the fluid level signal generated by the measurement capacitor (394) to generate a compensated fluid level signal indicating a level of the fluid relative to the apparatus despite temperature or fluid aging.

In the example of FIG. 3, an analog or digital capacitive application specific integrated circuit (ASIC) is mounted onto the EMA (306) and is configured to process the outputs of the plurality of electrodes on the sense element (390). In a particular embodiment, the EMA (306) includes signal processing circuitry coupled to the electrodes for converting the capacitance signals received from the sense element (390) into a linear ratio-metric analog voltage or digital output that indicates a level of the fluid relative to the apparatus. For example, the outputs of the measurement capacitor (394) and the reference capacitor (392) may be coupled to circuitry on the EMA (306) to determine the calibrated capacitance of the measurement capacitor (394) and the reference capacitor (392) when the sense element (390) is positioned within the fluid cavity (e.g., the fluid cavity (112) of FIG. 1) such that the reference capacitor (392) is submersed in the fluid and the fluid surface is in contact with the measurement capacitor (394).

The circuitry on the EMA (306) may be configured to dynamically select the electrodes for the measurement capacitor (394) and the reference capacitor (392). The circuitry on the EMA (306) may also be configured to measure the capacitance of each capacitor (e.g., the measurement capacitor (394) and the reference capacitor (392)) and generate a digitized sensor voltage representing the capacitance of each capacitor. In a particular embodiment, the circuitry on the EMA (306) is configured to calculate the level of the fluid within the fluid container as a linear function of the capacitance of the measurement capacitor (394) compensated by the amount and rate of change of the capacitance of the reference capacitor (392). For example, in an engine oil application, the circuitry may use the reference capacitor (392) to correct for differences in the dielectric constant between various oils and changes to the dielectric constant of the oil over different temperatures and over time.

In a particular embodiment, the level measurement is calculated based on the following equation:

$$Level = \frac{Capacitance\ of\ Measurement\ Capacitor}{Capacitance\ of\ Reference\ Capacitor} = \frac{Function\ (Level, \mathcal{E}(fluid), Temperature)}{Function\ (\mathcal{E}(fluid), Temperature)}$$

In a particular embodiment, the circuitry on the EMA (306) may include a temperature sensor or be coupled to an external temperature sensor. The circuitry may provide the output of the temperature sensors to other devices, such as an automobile PCM, along with the output of the capacitive sensor (e.g., the sense element 102).

In the example of FIG. 3, the position of the sense element (390) and internal seal (312) are controlled by a carrier (310), which is mated to the base connector (304) via snap fingers. The internal seal is seated between one of the faces of the carrier (310) and the floor of the metallic housing (320) to ensure a proper fluid media seal. Additionally, in the example of FIG. 3, the apparatus (300) includes potting (308) which attaches to the carrier (310) to prevent leakage around the rectangular cross-section of the substrate.

In the example of FIG. 3, the sense element (390) is encased by a metallic shield (326). The metallic shield (326) reduces stray electromagnetic interference of the inter-digitated planar capacitors (392, 394) from outside the metallic shield (326). The metallic shield (326) also confines the capacitance field which makes this apparatus immune to variations to fluid container shape, size, and bill of material. The metallic shield (326) may also be configured to provide a mechanical support for the sense element (390). For example, the metallic shield may include one or more ribs to reduce movement of the sense element within the cavity of the metallic shield.

The metallic shield (326) includes at least one ventilation hole (not shown) and one or more inlet holes (324) for allowing fluid and air to move from the fluid container outside the metallic shield (326) into the fluid cavity inside the metallic shield (326). In a particular embodiment, the shapes and sizes of the inlet holes may be optimized for mechanical filtering of the fluid level during dynamic environmental conditions. For example, the holes may be shaped and sized to reduce the effects of fluid sloshing on the level measurements. In the example of FIG. 3, the metallic shield (326) includes tails (328) that may be crimped during assembly.

A support cap (330) may also be added to the end of the shield to provide additional mechanical support to the sense element (390). For example, the support cap (330) may include a slot (332) to keep the sense element from moving within the cavity of the metallic shield (326). In a particular embodiment, the one or more ventilation holes may be part of the support cap. Readers of skill in the art will realize that all of the components of the apparatus (300) may be optimized for application media and environmental media. For example, additional external seals and dispensed sealants may be added depending on environmental exposure.

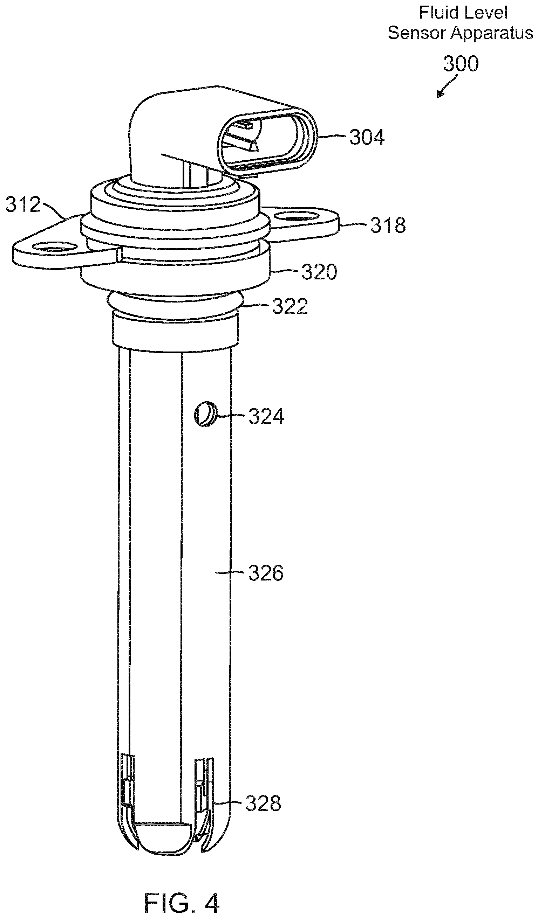

FIG. 4 depicts an isometric view of the fluid level sensor apparatus (300) of FIG. 3, after being assembled. In the example of FIG. 4, the environmental seal (302), the base connector (304), the EMA (306), the potting (308), the carrier (310), the internal seal (312), the edge clips (314), the sense element (390) are assembled and coupled to the metallic housing (320) and the mounting bracket (318). The metallic housing (320) is also coupled to the metallic shield (326) with the external seal (322) providing a means to prevent leakage of media fluid. In a particular embodiment, the ends of the shield may be closed to hold the support cap in place.

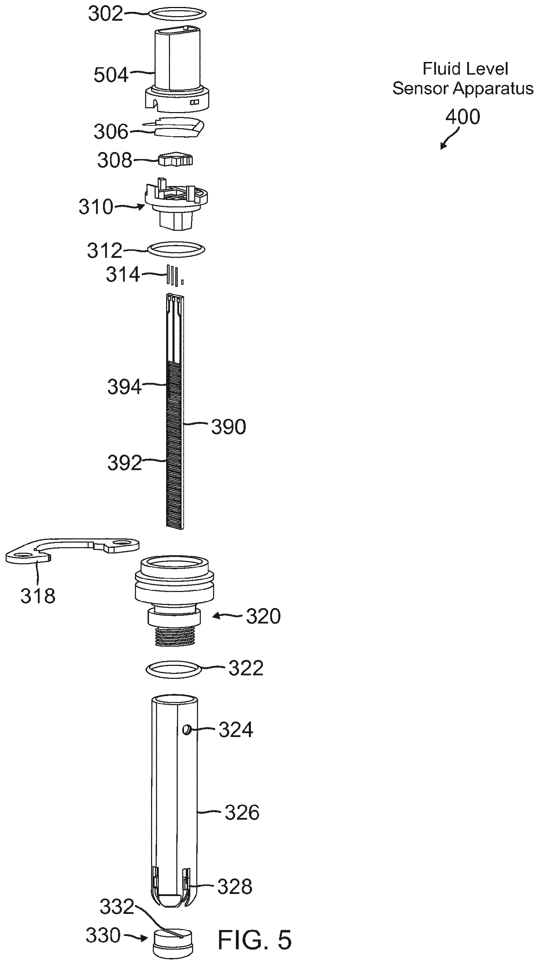

FIG. 5 depicts an isometric view of a fluid level sensor apparatus (500) before being assembled, according to one embodiment of the present disclosure. The apparatus (500) includes the environmental seal (302), the EMA (306), the potting (308), the carrier (310), the internal seal (312), the edge clips (314), the sense element (390), the metallic housing (320), the mounting bracket (318), the metallic shield (326), and the external seal (322) of the apparatus of FIG. 3.

In the example of FIG. 5, the apparatus (500) includes an alternative base connector (504), which is configured to mate with a customer harness to deliver inputs and outputs from the apparatus (500) to another electrical device, such as a vehicle's power-train control module (PCM). In the example of FIG. 5, the base connector (504) has a substantially straight mounting orientation. Readers of skill in the art will realize that the base connector may be configured for alternative mounting orientations, according to embodiments of the present disclosure. The base connector (504) includes insert-molded terminals for mating with the electronic module assembly (EMA) (306). Readers of skill in the art that the base connector (504) is just an example of one of many different types of connectors that can be used to couple a customer harness to the apparatus (500).

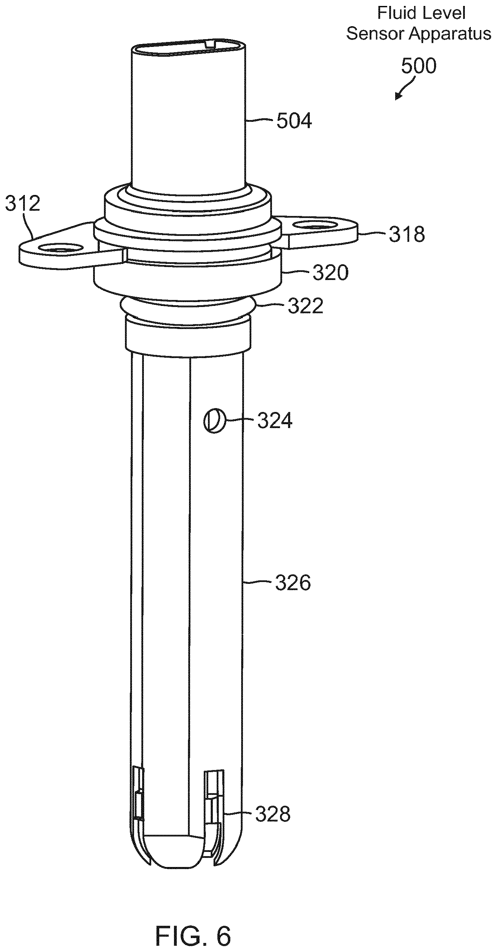

FIG. 6 depicts an isometric view of the fluid level sensor apparatus (500) of FIG. 5, after being assembled. In the example of FIG. 6, the environmental seal (302), the base connector (504), the EMA (306), the potting (308), the carrier (310), the internal seal (312), the edge clips (314), the sense element (390) are assembled and coupled to the metallic housing (320) and the mounting bracket (318). The metallic housing (320) is also coupled to the metallic shield (326) with the external seal (322) providing a means to prevent leakage of media fluid. In a particular embodiment, the ends of the shield may be closed to hold the support cap in place.

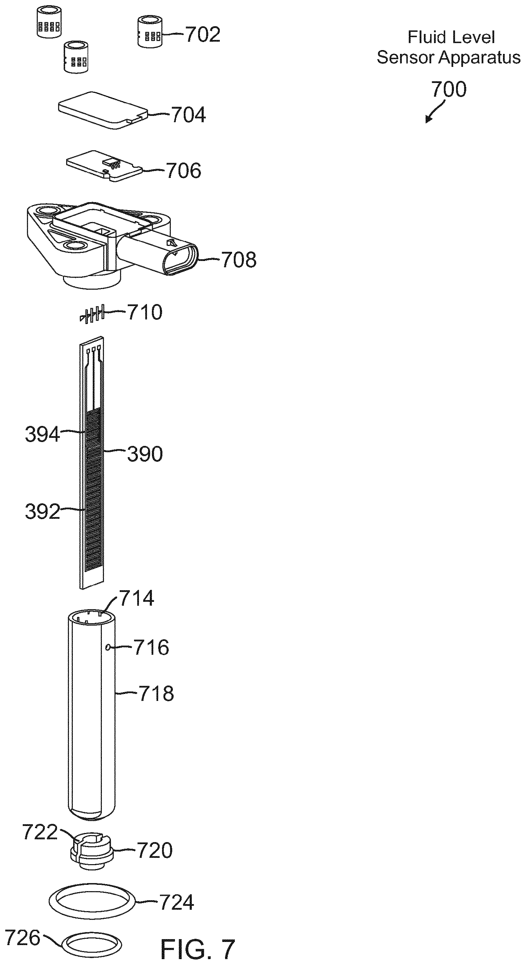

FIG. 7 depicts an isometric view of a fluid level sensor apparatus (700) before being assembled, according to one embodiment of the present disclosure. The apparatus (700) includes a plastic housing (708) which mates with a customer harness to deliver inputs and outputs from the apparatus to another electrical device. The plastic housing (708) includes insert-molded terminals for mating with an electronic module assembly (EMA) (706), which in turn makes electrical connection to a sense element (390), via an array of edge clips (710). In the example of FIG. 7, the EMA (706) is protected by a cover (704). The apparatus (700) also includes a plurality of bushings (702) for use in mounting the plastic housing (708) to an assembly, such as an oil pan.

In the example of FIG. 7, an application specific integrated circuit (ASIC) (705) is mounted onto the EMA (706) and is configured to convert capacitance signals received from the sense element (390) into a linear ratio-metric analog voltage and digital output that indicates a level of the fluid relative to the apparatus. For example, the outputs of the measurement capacitor (394) and the reference capacitor (392) may be coupled to the ASIC (705) to determine the calibrated capacitance of the measurement capacitor (394) and the reference capacitor (392) when the sense element (390) is positioned within the fluid cavity (e.g., the fluid cavity (112) of FIG. 1) such that the reference capacitor (392) is submersed in the fluid and the fluid surface is in contact with the measurement capacitor (394).

The ASIC (705) may be configured to dynamically select the electrodes for the measurement capacitor (394) and the reference capacitor (392). The ASIC (705) may also be configured to measure the capacitance of each capacitor (e.g., the measurement capacitor (394) and the reference capacitor (392)) and generate a digitized sensor voltage representing the capacitance of each capacitor. In a particular embodiment, the ASIC (705) is configured to calculate the level of the fluid within the fluid container as a linear function of the capacitance of the measurement capacitor (394) compensated by the amount and rate of change of the capacitance of the reference capacitor (392). For example, in an engine oil application, the circuitry may use the reference capacitor (392) to correct for differences in the dielectric constant between various oils and changes to the dielectric constant of the oil over different temperatures and over time.

In a particular embodiment, the level measurement is calculated based on the following equation:

$$\text{Level} = \frac{Capacitance\ of\ Measurement\ Capacitor}{Capacitance\ of\ Reference\ Capacitor} = \frac{Function\ (Level, \mathcal{E}(fluid), Temperature)}{Function\ (\mathcal{E}(fluid), Temperature)}$$

The sense element (390) includes two inter-digitated planar capacitors (392, 394). As explained in FIG. 2, one of the capacitors (e.g., the reference capacitor (392)) is designed to remain submerged at all times in the application fluid, so as to track a reference capacitance over temperature and fluid life. The other capacitor (e.g., the measurement capacitor (394)) is positioned to cover a detectable range of surface levels of the fluid. The output of the measurement capacitor (394) varies as a function of the change in level of the fluid. As the dielectric constant changes during the aforementioned conditions, the capacitance change of the reference capacitor (392) allows the ASIC to properly adjust the fluid level signal generated by the measurement capacitor (394) to generate a compensated fluid level signal indicating a level of the fluid relative to the apparatus.

In the example of FIG. 7, the sense element (390) is encased by a metallic shield (718). The metallic shield (718) reduces stray electromagnetic interference of the inter-digitated planar capacitors (392, 394) from outside the metallic shield (718). The metallic shield (718) also confines capacitance field which makes this apparatus immune to variations to fluid container shape, size, and bill of material. The metallic shield (718) may also be configured to provide a mechanical support for the sense element (390). For example, the metallic shield may include one or more ribs (714) to reduce movement of the sense element (390) within the cavity of the metallic shield (718).

The metallic shield (718) includes at least one ventilation hole (not shown) and one or more inlet holes (716) for allowing fluid and air to move from the fluid container outside the metallic shield (718) into the fluid cavity inside the metallic shield (718). In a particular embodiment, the shapes and sizes of the inlet holes may be optimized for mechanical filtering of the fluid level during dynamic environmental conditions. For example, the holes may be shaped and sized to reduce the effects of fluid sloshing on the level measurements.

A support cap (720) may also be added to the end of the shield to provide additional mechanical support to the sense element (390). For example, the support cap (720) of FIG. 7 includes a slot (722) for holding the sense element (390). The slot (722) of FIG. 7 may keep the sense element (390) from moving within the cavity of the metallic shield (718). Readers of skill in the art will realize that additional external seals and dispensed sealants may be added depending on environmental exposure.

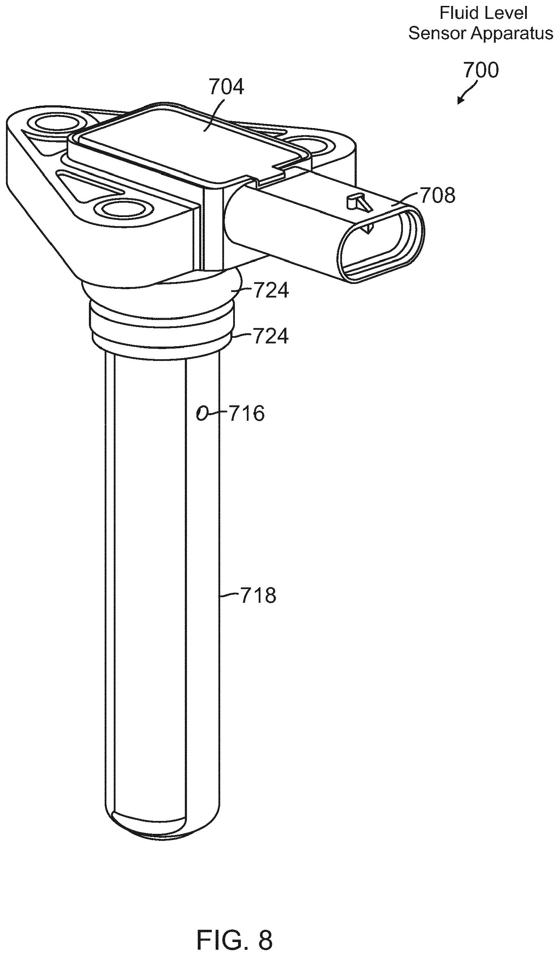

FIG. 8 depicts an isometric view of the fluid level sensor apparatus of FIG. 7, after being assembled. In the example of FIG. 8, the sense element (390) are coupled to the EMA (706) via the edge clips (710) and is encased within the metallic shield (718). The metallic shield (718) is fastened to the plastic housing (708), which also positions the external face seal (724) and the external radial seal (726). The support cap (720) is attached to the metallic shield (718) and provides mechanical support for the sense element (390) within the metallic shield (718). In the example of FIG. 8, the EMA (706) and the ASIC (705) are protected by the cover (704).

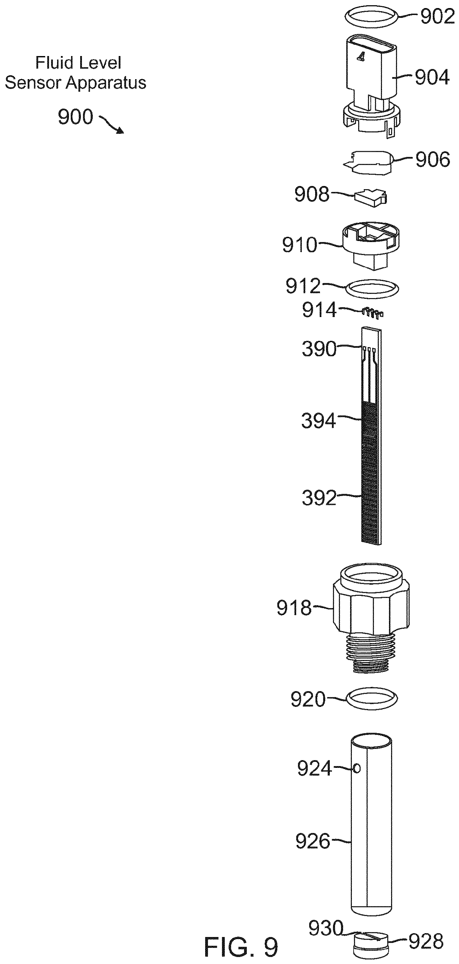

FIG. 9 depicts an isometric view of a fluid level sensor apparatus before being assembled, according to one embodiment of the present disclosure. The apparatus (900) includes a base connector (904) which mates with a customer harness to deliver inputs and outputs from the apparatus to another electrical device, such as a vehicle's power-train control module (PCM). The base connector (904) includes insert-molded terminals for mating with an electronic module assembly (EMA) (906), which in turn makes electrical connection to both a sense element (390), via an array of edge clips (914), and a metallic housing (918). In a particular embodiment, the metallic housing (918) may accommodate an array of mounting techniques. Examples of mounting techniques include threaded, bracketed, grommeted, quarter-turn, and others as will occur to those of skill in the art.

In the example of FIG. 9, an application specific integrated circuit (ASIC) is mounted onto the EMA (906) and is configured to convert capacitance signals received from the sense element (390) into a linear ratio-metric analog voltage or digital output that indicates a level of the fluid relative to the apparatus.

The sense element (390) includes two inter-digitated planar capacitors (392, 394). As explained in FIG. 2, one of the capacitors (e.g., the reference capacitor (392)) is designed to remain submerged at all times in the application fluid, so as to track the fluid capacitance over temperature and fluid life. The other capacitor (e.g., the measurement capacitor (394)) is positioned to cover a detectable range of surface levels of the fluid. The output of the measurement capacitor (394) varies as a function of the change in level of the fluid. As the dielectric constant changes during the aforementioned conditions, the capacitance change of the reference capacitor (392) allows the ASIC to properly adjust the fluid level signal generated by the measurement capacitor (394) to generate a compensated fluid level signal indicating a level of the fluid relative to the apparatus.

In the example of FIG. 9, the position of the sense element (390) and internal seal (912) are controlled by a carrier (910), which is mated to the base connector (904). The internal seal (912) is seated between one of the faces of the carrier (910) and the floor of the metallic housing (918) to ensure a proper fluid media seal. Additionally, in the example of FIG. 9, the apparatus (900) includes potting (908) which is dispensed into a cavity within the carrier (910) to prevent leakage around the rectangular cross-section of the ceramic element.

In the example of FIG. 9, the sense element (390) is encased by a metallic shield (926). The metallic shield (926) reduces interference with the two inter-digitated planar capacitors (392, 394) from outside the metallic shield (926). The metallic shield also confines electromagnetic field which makes this apparatus immune to variations to fluid container shape and dimensions. The metallic shield (926) may also be configured to provide a mechanical support for the sense element (390). For example, the metallic shield may include one or more ribs to reduce movement of the sense element within the cavity of the metallic shield.

The metallic shield (926) includes at least one ventilation hole (not shown) and one or more inlet holes (924) for allowing fluid and air to move from the fluid container outside the metallic shield (926) into the fluid cavity inside the metallic shield (926). In a particular embodiment, the shapes and sizes of the inlet holes may be optimized for mechanical filtering of the fluid level during dynamic environmental conditions. For example, the holes may be shaped and sized to reduce the effects of fluid sloshing on the level measurements.

A support cap (928) may also be added to the end of the shield to provide additional mechanical support to the sense element (390). In a particular embodiment, the one or more ventilation holes may be part of the support cap. The metallic shield (926) may also be configured to provide a mechanical support for the sense element (390). In the example of FIG. 9, the metallic shield (926) includes a slot (930) to reduce movement of the sense element (390) within the cavity of the metallic shield (926). Readers of skill in the art will realize that additional external seals and dispensed sealants may be added depending on environmental exposure.

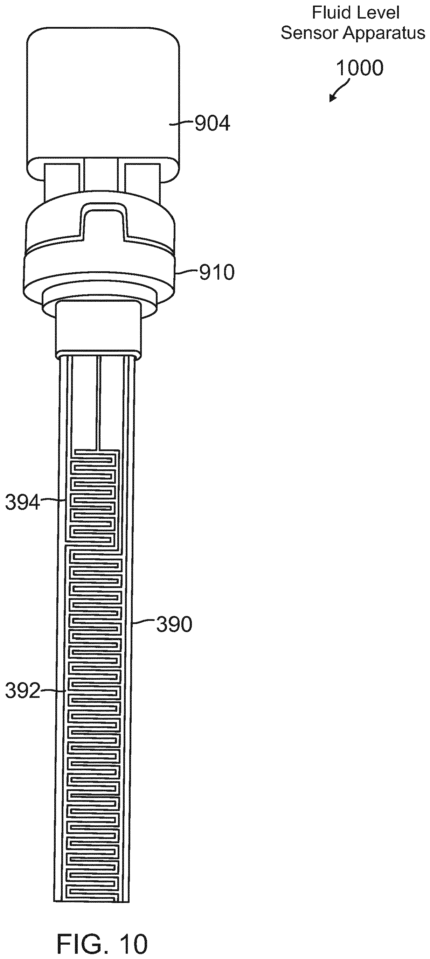

FIG. 10 depicts an isometric view of a fluid level sensor apparatus (1000). In the example of FIG. 10, the base connector (904), the carrier (910), and the sense element (390) of FIG. 9 are coupled together.

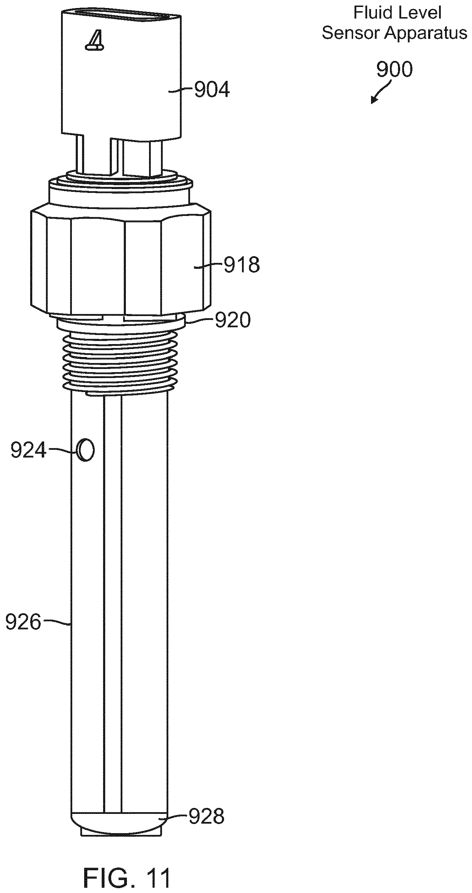

FIG. 11 depicts an isometric view of the oleophobic fluid level sensor apparatus of FIG. 9, after being assembled. In the example of FIG. 11, the environmental seal (902), the base connector (904), the EMA (906), the potting (908), the carrier (910), the internal seal (912), the edge clips (914), the sense element (390) are assembled and coupled to the metallic housing (918). The metallic housing (918) is also coupled to the metallic shield (926) with the external seal (920) providing a seal to prevent leakage of any media fluid. In a particular embodiment, the ends of the shield may be closed to hold the support cap in place.

It will be appreciated by those of ordinary skill in the pertinent art that the functions of several elements may, in alternative embodiments, be carried out by fewer elements or a single element. Similarly, in some embodiments, any functional element may perform fewer, or different, operations than those described with respect to the illustrated embodiment. Also, functional elements shown as distinct for purposes of illustration may be incorporated within other functional elements in a particular implementation.

While the subject technology has been described with respect to preferred embodiments, those skilled in the art will readily appreciate that various changes and/or modifications can be made to the subject technology without departing from the spirit or scope of the subject technology. For example, each claim may be dependent from any or all claims in a multiple dependent manner even though such has not been originally claimed.

**Claims**

1. A fluid level sensor apparatus for directly inserting into an oil-based fluid, the apparatus comprising a sense element that includes:

   a plurality of electrodes mounted on one side of a substrate, the plurality of electrodes forming at least two inter-digitated planar capacitors in which a capacitance of one of the inter-digitated planar capacitors varies as a function of the level of the oil-based fluid within a fluid cavity;
   a passivation layer covering the two inter-digitated planar capacitors; and
   an oleophobic coating covering the glass barrier layer.

2. The apparatus of claim 1 further comprising a metallic shield that surrounds the sense element and reduces interference with the two inter-digitated planar capacitors from outside the metallic shield; wherein the area between the metallic shield and the sense element forms the fluid cavity.

3. The apparatus of claim 2, wherein the metallic shield includes one or more elements for supporting the sense element within the metallic shield.

4. The apparatus of claim 2 or 3, wherein the metallic shield includes at least one inlet hole through which the fluid may flow from the fluid container into the fluid cavity.

5. The apparatus of any one of claims 2 to 4, wherein the metallic shield includes a plurality of flexible tails that may be clinched during assembly to close the bottom of the metallic shield.

6. The apparatus of any one of claims 2 to 5 or any one of claims 11 to 15, wherein the metallic shield includes at least one ventilation hole.

7. The apparatus of any one of claims 2 to 6 or any one of claims 11 to 15 further comprising a support cap for inserting into the bottom of the metallic shield, the support cap including a slot for supporting the sense element within the metallic shield.

8. The apparatus of any one of claims 1 to 7 or any one of claims 11 to 15, wherein the oleophobic coating includes fluorinated silane.

9. The apparatus of any one of claims 1 to 8, wherein the other inter-digitated planar capacitor acts as a reference capacitor that is configured to provide an estimate of the dielectric constant of the oil-based fluid within the fluid cavity.

10. The apparatus of any one of claims 1 to 9 or any one of claims 11 to 15 further comprising signal processing circuitry coupled to the plurality of electrodes for converting the capacitance values of any capacitors formed by the electrodes into electrical signals and processing the electrical signals to provide an output signal indicative of a level of the oil-based fluid within the fluid cavity relative to the apparatus.

11. A fluid level sensor apparatus for directly inserting into an oil-based fluid, the apparatus comprising:

   a sense element that includes a plurality of electrodes mounted on one side of a substrate, the plurality of electrodes forming at least two inter-digitated planar capacitors in which a capacitance of one of the inter-digitated planar capacitors varies as a function of the level of the oil-based fluid within a fluid cavity; and
   a metallic shield that reduces interference with the two inter-digitated planar capacitors from outside the metallic shield and includes one or more elements for supporting the sense element within the metallic shield.

12. The apparatus of claim 11, wherein the sense element further includes:

   a passivation layer covering the two inter-digitated planar capacitors; and
   an oleophobic coating covering the glass barrier layer.

13. The apparatus of claim 11 or 12, wherein the other inter-digitated planar capacitor acts as a reference capacitor that is configured to provide an estimate of the dielectric constant of the oil-based fluid within the fluid cavity.

**14.** The apparatus of any one of claims 11 to 13, wherein the area between the metallic shield and the sense element forms the fluid cavity.

**15.** The apparatus of any one of claims 11 to 14, wherein the metallic shield includes at least one inlet hole through which the fluid may flow from the fluid container into the fluid cavity; or a plurality of flexible tails that may be clinched during assembly to close the bottom of the metallic shield.

Fluid Level
Sensor Apparatus
**100**

Metallic Shield
**114**

Fluid Cavity
**112**

Oleophobic Coating
**110**

Glass
Passivation
Layer **108**

Plurality of
Electrodes
**106**

Sense Element
**102**

Substrate
**104**

FIG. 1

Fluid Level
Sensor Apparatus

/ 200

Substrate

104

Measurement
Capacitor
250

Lower Compensation
Capacitor
254

Sense Element

102

First Electrode
260

Third Electrode
264

Second Electrode
262

FIG. 2

Fluid Level
Sensor Apparatus

300

FIG. 3

Fluid Level
Sensor Apparatus
300

304

312

318

320

322

324

326

328

FIG. 4

302

504

306

308

310

312

314

394

390

392

318

320

322

324

326

328

332

330

Fluid Level
Sensor Apparatus

400

FIG. 5

Fluid Level
Sensor Apparatus

500

— 504

312

— 318

— 320

— 322

— 324

— 326

— 328

FIG. 6

702

Fluid Level
Sensor Apparatus

700

704

706

708

710

394

390

392

714

716

718

722

720

724

726

FIG. 7

Fluid Level
Sensor Apparatus

700

704

708

724

724

716

718

FIG. 8

Fluid Level
Sensor Apparatus

900

902

904

906

908

910

912

914

390

394

392

918

920

924

926

930

928

FIG. 9

20

Fluid Level
Sensor Apparatus

1000

—904

—910

394—

—390

392—

FIG. 10

Fluid Level
Sensor Apparatus

**FIG. 11**